# FASCICULE DE BREVET EUROPEEN

(11) **EP 0 587 495 B1**
(45) Date de publication et mention de la délivrance du brevet: **24.04.1996**
(21) Numéro de dépôt: 93402184.1
(22) Date de dépôt: 08.09.1993
(51) Int. Cl.: H02B 5/06

(54) **Poste modulaire à enveloppe métallique du type blindé à jeu de barres et encombrement réduits**
Modulare, metallgekapselte Schaltanlage mit reduziertem Stromschiene- und Raumbedarf
Modular metal clad installation with reduced bus bar and space requirements

(30) Priorité: 11.09.1992 FR 9210857
(43) Date de publication de la demande: 16.03.1994
(73) Titulaire: GEC ALSTHOM T ET D SA, F-75116 Paris (FR)
(72) Inventeur: Marmonier, Jean, F-73100 Aix Les Bains (FR)
(74) Mandataire: Fournier, Michel

(56) Documents cités:
- EP-A- 0 093 687
- FR-A- 2 435 843
- FR-A- 2 458 160
- US-A- 4 032 820
- PATENT ABSTRACTS OF JAPAN, vol. 002, no. 051 (E-026)(1007); & JP-A-53 015 541

## Description

La présente invention se rapporte à un poste modulaire sous enveloppe métallique du type blindé à jeu de barres et encombrement réduits.

Elle concerne plus exactement un poste d'alimentation modulaire sous enveloppe métallique comportant un jeu de barres principal reliant au moins deux paires de composants, tels que des traversées aériennes ou des boîtes à câbles, selon une configuration de poste en H.

De façon générale, de telles paires de composants sont disposés sur un même côté du jeu de barres principal et reliés à ce dernier. La longueur du jeu de barres principal est donc relativement grande compte tenu des distance imposées entre composants pour des raisons électriques et de sécurité. Par exemple, dans le cas de traversées aériennes, cette distance est de l'ordre de 5 mètres pour un niveau de tension de 72,5 kV.

Le but de l'invention est de réduire la longueur du jeu de barres tout en respectant les distances entre composants imposées, afin de réaliser un poste d'encombrement minimal et de coût réduit.

Pour ce faire, selon l'invention, les composants sont reliés par paire par un agencement rectiligne d'appareillages électriques sous enveloppes métalliques, parallèle et relié au jeu de barres principal.

Grâce à cette nouvelle architecture, la longueur du jeu de barres principal est réduite dans un rapport d'environ un quart comme il sera montré dans la description ci-après.

Avantageusement, les agencements d'appareillages électriques sont alignés. Dans ce cas, le poste est symétrique et ne nécessite pas de liaison par barres entre chaque paire et le jeu de barres principal.

Selon un mode de réalisation préféré, les composants sont des traversées aériennes inclinées de façon alternée de part et d'autre du plan vertical contenant leur base.

De cette façon, l'on réduit de façon optimale tout jeu de barres, entre traversées et au niveau du jeu principal, puisque l'inclinaison entraîne une augmentation de la distance entre têtes de traversées ce qui permet de réduire l'écart entre leur base comme il sera montré plus loin.

L'invention est décrite ci-après plus en détail à l'aide de dessins ne représentant qu'un mode préféré de réalisation.

La figure 1 est une vue schématique de dessus d'un poste selon l'art antérieur.

La figure 2 est le schéma électrique de ce poste.

La figure 3 est une vue schématique de dessus d'un poste conforme à l'invention.

La figure 4 est le schéma électrique de ce poste.

La figure 5 est une vue en éclaté partielle d'un poste conforme à l'invention.

La figure 6 est une vue de dessus d'un poste conforme à l'invention.

La figure 7 est une vue en perspective d'un poste conforme à l'invention.

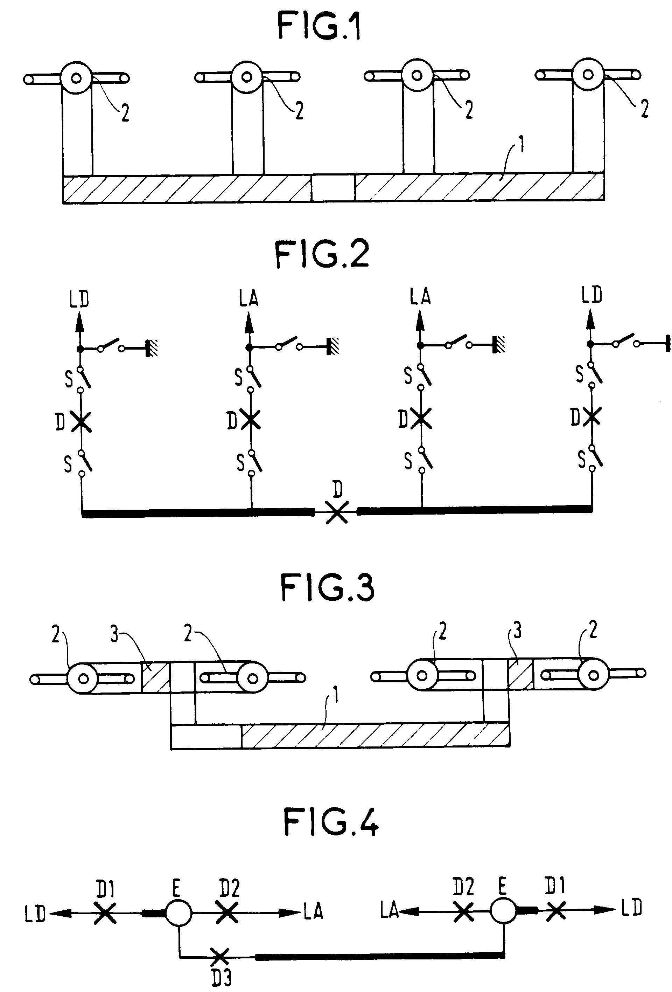

La figure 1 représente un mode de réalisation généralement utilisé et la figure 2 son schéma électrique.

Les composants 2 ici des traversées aériennes sont tous disposés d'un même côté du jeu de barres principal 1. Que ce soit une ligne d'arrivée LA ou une ligne de départ LD, chaque branche les reliant au jeu de barres 1 comporte une mise à la terre, un premier sectionneur S, un disjoncteur D et un second sectionneur S. Le jeu de barres 1 comporte quant à lui un disjoncteur D.

La distance minimale entre traversées aériennes étant imposée, la longueur du jeu de barres est définie et est représentée en hachures sur la figure 1.

La figure 3 représente un poste en H conforme à l'invention et la figure 4 son schéma électrique.

Les traversées 2 sont reliées par paire par un agencement rectiligne 3 d'appareillages électriques sous enveloppes métalliques, parallèle et relié au jeu de barres principal 1. Les agencements d'appareillages 3 de préférence sont alignés. Chaque agencement 3 relie une ligne d'arrivée LA et une ligne de départ LD et comporte un premier disjoncteur D1, un composant E destiné à réaliser l'équivalent de trois sectionneurs triphasés avec possibilité de mise à la terre, par exemple comme décrit dans la demande de brevet EP-A-0 526 308 déposée le 22 juillet 1992 par la Déposante, et un second disjoncteur D2. Le jeu de barres principal 1 comporte également un disjoncteur D3. L'on obtient ainsi un schéma électrique en H.

Les longueurs de jeu de barres nécessaires sont représentées sur la figure 3 en hachures et sont substantiellement diminuées par rapport à l'art antérieur grâce à cette nouvelle architecture malgré la nécessité de barres au niveau des agencements 3 pour respecter la distance minimale imposée entre traversées 2.

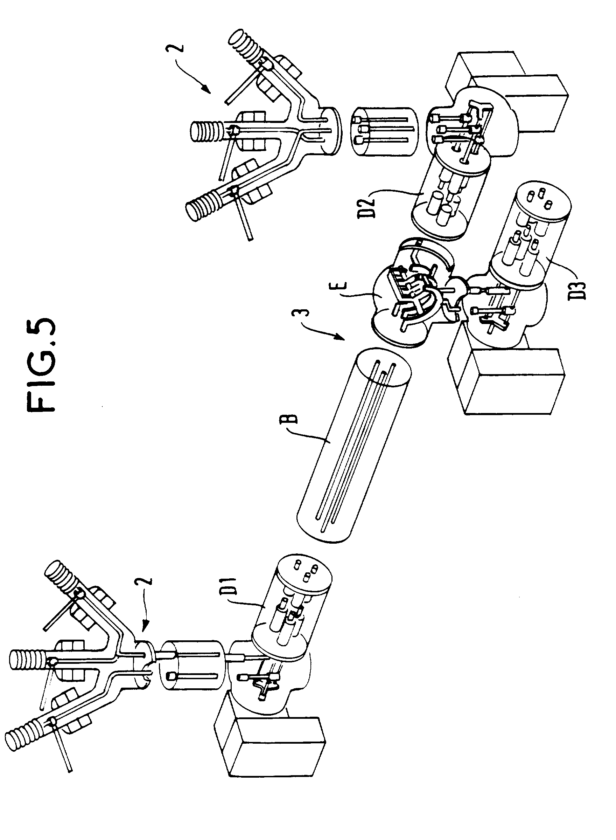

La figure 5 représente partiellement mais plus en détail un tel poste.

Les traversées 2 d'une même paire sont reliées via le premier disjoncteur D1, un jeu de barres B, le composant E et le second disjoncteur D2. Le disjoncteur D3 du jeu de barres principal est relié au composant E.

Une telle architecture peut être utilisée tout autant avec des composants 2 constitués de traversées aériennes comme décrit qu'avec des composants constitués de boîtes à câbles.

Grâce à une autre caractéristique, il est possible de diminuer encore la longueur de jeu de barres nécessaire en particulier dans le cas de traversées aériennes.

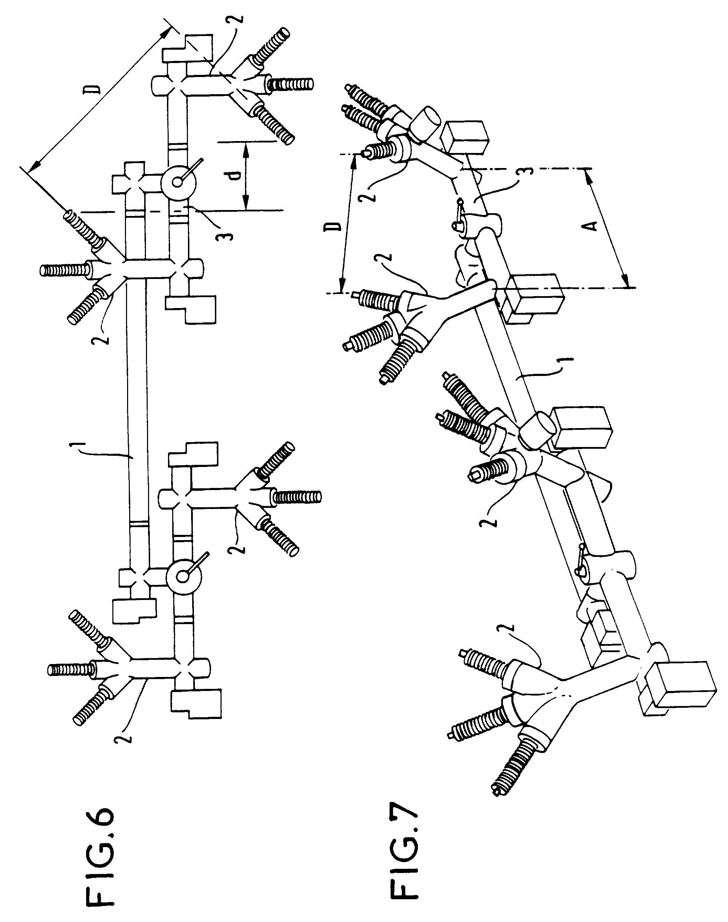

Les figures 6 et 7 représentent le mode de réalisation préféré de l'invention.

Les traversées aériennes 2 sont inclinées de façon alternée de part et d'autre du plan vertical contenant leur base, de préférence cette inclinaison sera de l'ordre de 30°. Ainsi la distance A entre les bases des traversées 2 est diminuée de (D-d) compte tenu de l'augmentation de l'écart obtenu entre traversées 2. Il est ainsi possible de réduire encore la longueur tout autant du jeu de barres principal que des barres contenues dans l'agencement 3 et d'obtenir une diminution globale de la longueur du poste dans un rapport d'environ 1/2.

Outre son coût réduit, la compacité d'un tel poste présente de nombreux avantages. En particulier, elle réduit les contraintes de transport et d'installation.

## Revendications

1. Poste d'alimentation modulaire sous enveloppe métallique comportant un jeu de barres principal (1) reliant au moins deux paires de composants (2), tels que des traversées aériennes ou des boîtes à câbles, selon une configuration de poste en H, caractérisé en ce que les composants (2) sont reliés par paire par un agencement rectiligne (3) d'appareillages électriques sous enveloppes métalliques, parallèle et relié au jeu de barres principal (1).

2. Poste selon la revendication 1, caractérisé en ce que les agencements d'appareillages électriques (3) sont alignés.

3. Poste selon la revendication 2, caractérisé en ce que les composants (2) sont des traversées aériennes inclinées de façon alternée de part et d'autre du plan vertical contenant leur base.

## Patentansprüche

1. Modulare metallgekapselte Stromversorgungs-Schaltanlage mit einem Hauptschienensatz (1), der mindestens zwei Paare von Bauteilen (2) wie Freileitungs-Durchführungen oder Kabelkästen gemäß einer H-förmigen Ausbildung der Schaltanlage verbindet, dadurch gekennzeichnet, daß die Bauteile (2) paarweise durch eine geradlinige Anordnung (3) von metallgekapselten elektrischen Schaltgeräten verbunden sind, die parallel und mit dem Hauptschienensatz (1) verbunden ist.

2. Schaltanlage nach Anspruch 1, dadurch gekennzeichnet, daß die Anordnungen von elektrischen Schaltgeräten (3) fluchtend angeordnet sind.

3. Schaltanlage nach Anspruch 2, dadurch gekennzeichnet, daß die Bauteile Freileitungs-Durchführungen sind, die alternierend zu beiden Seiten der ihre Basis enthaltenden senkrechten Ebene geneigt sind.

## Claims

1. A metal-clad modular power-supply station comprising a main set of busbars (1) interconnecting at least two pairs of components (2), such as overhead feedthroughs or cable boxes, in an H-station configuration, characterized in that the components (2) are connected together in pairs by respective rectilinear groups (3) of metal-clad electrical apparatuses that are parallel to and connected to the main set of busbars (1).

2. A station according to claim 1, characterized in that the groups of electrical apparatuses (3) are in alignment.

3. A station according to claim 2, characterized in that the components (2) are overhead feedthroughs that are inclined in alternating manner on either side of the vertical plane containing their bases.
